# EUROPEAN PATENT APPLICATION

(11) **EP 2 765 765 A1**
(43) Date of publication of application: **13.08.2014**
(21) Application number: 13154735.8
(22) Date of filing: 08.02.2013
(51) Int. Cl.: H04N 5/217, H04N 5/335, H04N 17/00

(54) **Digital camera and method of capturing an image**

(71) Applicant: Harvest Imaging bvba, 3960 Bree (BE)
(72) Inventor: Theuwissen, Albert, 3960 Bree (BE)
(74) Representative: Hertoghe, Kris Angèle Louisa

(57) **Abstract**

A method of capturing an image by a digital camera comprising an image sensor, a processor, and a memory, the method comprising:
a) capturing an image using the image sensor;
b) detecting defective pixels of the image sensor by analysing the captured image, and storing information of the defective pixels in a first list (LIST1);
c) retrieving from the memory a second list (LIST2) comprising information of previously detected defective pixels of the image sensor;
d) updating the second list with information from the first list;
e) storing the updated second list (LIST2*) in memory;
f) correcting the captured image based on the updated second list (LIST2*).

## Description

### Field of the invention

The present invention relates to the field of digital cameras comprising an image sensor, and to methods for detecting defective pixels of the image sensor during actual use of the digital camera.

### Background of the invention

Digital cameras having an image sensor, such as e.g. a CCD (charge-coupled device) sensor, or a CMOS image sensor, may in particular be used in consumer applications. The resolution of such image sensors has tremendously increased (from below 1M pixels to about 5M pixels and more in recent years), thanks to technology scaling in semiconductor industry. At the same time, memory size and processing speed has also increased, allowing complicated digital processing to be performed in the digital camera.

It is known and generally accepted that image sensors are not perfect. They typically have a certain number of defects, which implies that the values provided by these defect pixels cannot be used, and need to be corrected for avoiding images with visual artefacts. Without provision of defect pixel correction, the manufacturers of the image sensors would be forced to deliver only defect-free devices, which would drastically lower the yield and increase the price. This is highly undesirable, especially for consumer electronics applications. Instead, the fact that defects occur is accepted, and is somehow compensated for, by using techniques for detecting such defects, and correcting for them. A few of such techniques are listed below.

For example, US2006221214A discloses a system and method for processing a digital image. The system and method processes image data by replacing bad pixel data in the digital image. Specifically, the system and method replaces bad pixel data in the image data by comparing the data from each pixel to the data from selected neighbouring pixels, including pixels of other colours in some cases, and determining if the pixel is likely corrupt, such as from a detective pixel. Image values from corrupted pixels are then replaced using averages, means, maximums, or other statistical functions of image values of selected nearby pixels.

Defects in image sensors may be detected during the production (or calibration) of the image sensor and/or digital camera, for example, by capturing a so-called "dark image" and checking if there are bright (e.g. white) pixels, or by capturing a bright image and checking if there are dark pixels, etc. Such pixel locations would then be stored in a non-volatile memory of the digital camera, and considered as bad pixels during normal use of the camera. The data originating from these pixel locations will then be corrected before providing the actual image.

It is also possible to detect defective pixels dynamically, as disclosed in US2005010621A. Rather than storing a table within a digital camera or other optical device of defective pixels within its image sensor, defective pixels are dynamically identified by comparing the output values of individual pixels under test with those of neighbouring pixels. If the output values of the neighbours are all above or below the output value of the pixel under test by a defined threshold amount, the output of the pixel under test is replaced with a value calculated from the outputs of neighbouring pixels.

The defects can be individual pixel locations, or can also be partial or entire columns or rows. US2003053142A describes a method for determining defects in an image sensor, which identifies one or more partial column defects, including capturing a digital image using the image sensor and storing such digital image in a memory; identifying at least one column in the digital image which has corrupted data caused by one or more defective pixels in the image sensor; processing the digital image data from the at least one identified column using an extended differentiation filter; and using the output of the extended differentiation filter to identify a starting position or an ending position of the partial column defect.

Apart from defects, another problem is that the output of all the pixels of the device in dark do not provide exactly the same output signal, even when they receive the same input (light) signal. This problem is approached in the prior art by capturing and storing a so called "dark current reference frame", and by subtracting it from subsequently captured images, as described in US2004263648A.

The above mentioned methods and devices work quite well, except for a particular kind of defect, which is of particular interest for the present invention, that is so-called "RTS (Random Telegraph Signal) pixels". The existence and behaviour of RTS pixels is studied in the prior art (e.g. in the master thesis of Jozsef Dudas "CHARACTERIZATION AND AVOIDANCE OF IN-FIELD DEFECTS IN SOLID-STATE IMAGE SENSORS", B.A.Sc. Simon Fraser University 2005, spring 2008). Nevertheless, existing digital cameras and methods implemented therein, do not seem to take such RTS-pixels into account.

### Summary of the invention

It is an object of embodiments of the present invention to provide a method and a device for capturing an image by a digital camera.

In particular, it is an object of embodiments of the present invention to provide a digital camera and a method implemented in such digital camera, for capturing a good image.

This objective is accomplished by a method and device according to embodiments of the present invention.

In a first aspect, the present invention provides a method of capturing an image by a digital camera, the digital camera comprising an image sensor for capturing image data, a processor for processing the captured image data, and a memory operably connected to the processor for storing and obtaining information, the method comprising: a) capturing an image using the image sensor; b) detecting potentially defective pixels of the image sensor by analysing the captured image using a predefined detection algorithm, and storing information about the potentially defective pixels in a first list; c) retrieving from the memory a second list comprising information about previously detected potentially defective pixels of the image sensor; d) updating the second list with the information from the first list; e) storing the updated second list in the memory; f) correcting the captured image data based on the updated list, using a predefined correction algorithm.

It is an advantage of this method that it allows defective pixels to be detected over a plurality of captured images, not only the most recent captured image. This highly reduces the risk that any real defective pixel (including RTS pixels) remains undetected.

It is also an advantage of this method that the risk of providing an image with "false" image data is reduced, or minimized.

It is an advantage of embodiments of the present invention that the mechanism of retrieving and updating the second list, as described above, can collect all the different kinds of defective pixels (e.g. "stuck-at" defects, or "dead pixels", or "sick pixels", or "RTS pixels").

It is an advantage of this method that it is particularly suitable for correcting RTS-pixels, even if the RTS pixel is not detected in the last captured image, but has been detected in any of the previously captured images.

As far as is known to the inventor, existing methods do not keep a history of defects found in previously taken images. Possibly this is a deliberate choice, taken more as a precaution in order to avoid that the camera would generate a huge number of false defects during its lifetime. Although possible, in some embodiments of the present invention the latter issue can be avoided by providing possibilities of removing certain pixels from the second defect list. In this way, the algorithm can be made "safe" also for consumer applications.

In an embodiment, the method further comprises step g) of retrieving from the memory a third list comprising information of defective pixels detected during production or calibration. The correction in step f) is further based on the defective pixels from the third list.

This embodiment has the advantage that already some of the defective pixels are found during the production stage, thus enabling an improved correction of the initial (for example, the very first, or the first few, e.g. ten) images taken by the end-user.

In an embodiment, the pixels determined during production may be stored as a production version of the second list, in which case the third list is not required. For cost reasons, calibration is only performed in high end devices; hence it is not necessary that low end devices have such a third list.

In an embodiment, the method further comprises, after updating the second list with the information from the first list, and before storing the updated second list in the memory, a step h) of analysing the updated second list and moving information from pixels considered as permanent defects according to a predefined criterion from the second list to the third list Step e) further comprises storing the third list in the memory.

This embodiment is a special case of the above-mentioned embodiment, wherein the pixels considered to be "permanent defects" are moved out of the second list, and into the third list. This has the advantage that these pixels need not be considered anymore when updating the second list, thus saving processing time and power.

In an embodiment, the information about the potentially defective pixels stored in the first list and the second list comprises the pixel location.

The first, second and optional third list needs to contain at least the pixel location of the defective pixel in the digital image or in the image sensor. The pixel location may be indicated in any suitable way, e.g. by storing coordinates, or by means of a bitmap.

In an embodiment, the information in the first and second list contains "only" location information. In such an embodiment, once a pixel is detected as "potentially defective", it will enter the first list, and the second list, and remain there forever. Such a strategy may be very effective for RTS pixels.

In an embodiment, the information about the potentially defective pixels stored in the first list further comprises the pixel value.

In this embodiment, the "bad" pixel value is stored in the first list, which information can then be incorporated in some way (e.g. as the value itself, or as a sum, or as a minimum or maximum value, or otherwise) in the second list. Such additional data may be useful afterwards, e.g. for deciding whether the pixel is a "real defect", or was "falsely detected".

In an embodiment, the information in the second list further comprises statistical information about the potentially defective pixels.

It is an advantage of keeping some kind of statistical information in the second list, because such statistical information may be used later to get a better impression of whether the pixels are really "defective" or not, by collecting information over multiple images.

The power of keeping such statistical information should not be underestimated. For example, one particular advantage of such statistical information is that it may be used to remove pixels from the second list, which were falsely detected as defective pixels. This mechanism of allowing some pixels "to escape" from the second list, allows the detection mechanism to be less than perfect, which is particularly advantageous in this application, since the detection needs to analyse all kinds of images, not just test-images.

In an embodiment, the statistical information in the second list comprises a defect counter, and updating the second list in step d) comprises either adding the pixels from the first list to the second list if not yet present in the second list, or increasing the defect counter of the respective pixels if already present in the second list.

By using a defect counter, the digital camera can keep track of how often a particular pixel was detected as a "potentially defect pixel". This defect counter can e.g. be used in combination with the global picture counter (as typically present in modern digital cameras for allocating a file-name for each picture taken), to determine in which percentage of the pictures taken, a particular pixel was found to be defective.

In an embodiment of the method, the predefined criterion for considering a pixel location as a permanent defect is when the defect counter is larger than a first predefined threshold.

Thus when such a pixel is found to be defective in a number of pictures higher than the first threshold T1, it would be moved from the second list to the third list. Moving such a pixel out of the second list may improve the efficiency of updating the second list, because such a pixel would not need to be considered further.

In an embodiment, the statistical information in the second list furthermore comprises an image counter, and updating the second list in step d) comprises increasing the image counter of each of the pixels already present in the second list.

Maintaining two counters, an image counter and a defect counter, allows to differentiate between "real defects" (D/N ratio close to 1.0), or "false defects" (D/N ratio close to 0.0), or "RTS pixels" (e.g. D/N ratio higher than 5%). Such information could then subsequently be used, e.g. to remove "false defects" from the second list.

In an embodiment, updating the second list comprises removing pixels from the second list for which the defect counter equals one, and the picture counter is larger than a second threshold.

When T2 = 20 for example, this would mean that a false defect will be removed from the second list, if it is not detected as a defect in twenty images following the first false detection.

In an embodiment, updating the second list comprises removing pixels from the second list for which the picture counter is larger than a third predefined threshold, and the ratio of the defect counter over the picture counter is smaller than a fourth predefined threshold.

In this way, falsely detected pixels can escape from the second list, even if they are falsely detected in two separated images, taken relatively shortly after one another.

In an embodiment, the predefined criterion for considering a pixel location as a permanent defect is when the picture counter is larger than a fifth predefined threshold and the ratio of the defect counter over the picture counter is larger than a sixth predefined threshold.

In a second aspect, the present invention provides a digital camera comprising an image sensor for capturing image data; a processor connected to the image sensor for receiving the image data; a memory operably connected to the processor, the processor being provided with an algorithm for performing a method according to the first aspect.

In a third aspect, the present invention provides a computer program product that, when executed on the processor of a digital camera having an image sensor and a memory according to the second aspect, provides instructions for executing a method according to the first aspect.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1(a) to (f) show examples of the behaviour of three "RTS pixels".
FIG. 1(a) shows a first example of sampled output values of a two-level RTS pixel.
FIG. 1(b) shows the histogram of the samples of FIG. 1(a).
FIG. 1(c) shows a second example of sampled output values of a two-level RTS pixel.
FIG. 1(d) shows the histogram of the samples of FIG. 1(c).
FIG. 1(e) shows a third example of sampled output values of a four-level RTS pixel.
FIG. 1(f) shows the histogram of the samples of FIG. 1(e).
FIG. 2 shows a prior art method of capturing an image, wherein defect pixels are dynamically detected and corrected.
FIG. 3 is a schematic representation of a datapath as can be used in the method of FIG. 2.
FIG. 4 shows a prior art method of capturing an image, wherein defect pixels are dynamically detected, and combined with defect pixels detected during production.
FIG. 5 is a schematic representation of a datapath as can be used in the method of FIG. 4.
FIG. 6 shows a method of capturing an image as a first embodiment of the present invention, wherein defect pixels are dynamically detected, and combined with defect pixels detected in earlier images captured during actual use of the camera.
FIG. 7 is a schematic representation of a datapath as can be used in the method of FIG. 6.
FIG. 8 shows a method of capturing an image as a second embodiment of the present invention, wherein defect pixels are dynamically detected, and combined with defect pixels detected in earlier images captured during actual use of the camera, and further combined with defect pixels detected during production.
FIG. 9 is a schematic representation of a datapath as can be used in the method of FIG. 8.
FIG. 10 shows a variant of the method of FIG. 8 as a third embodiment of the present invention, wherein "permanent" defect pixels are moved from the second list to the third list.
FIG. 11 shows an example of the kind of information (here: pixel locations) which can be stored in the two or three lists, as can be used in embodiments of the present invention.
FIG. 12 shows an example of the kind of information (here: pixel locations and two counters) which can be stored in the two or three lists, as can be used in embodiments of the present invention.
FIG. 13 is a block diagram of a digital camera for performing a method according to embodiments of the present invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

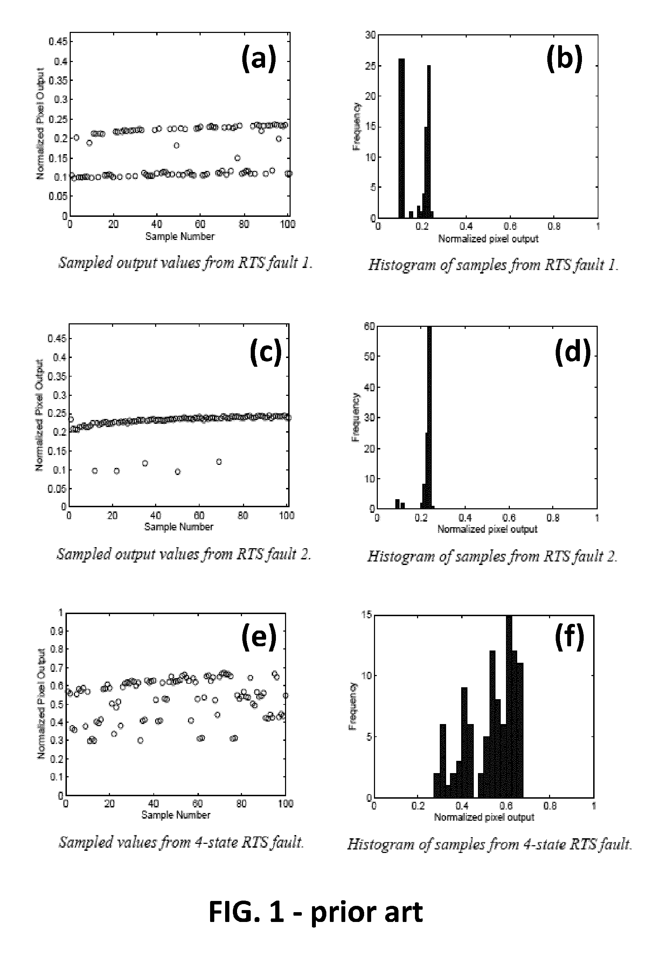

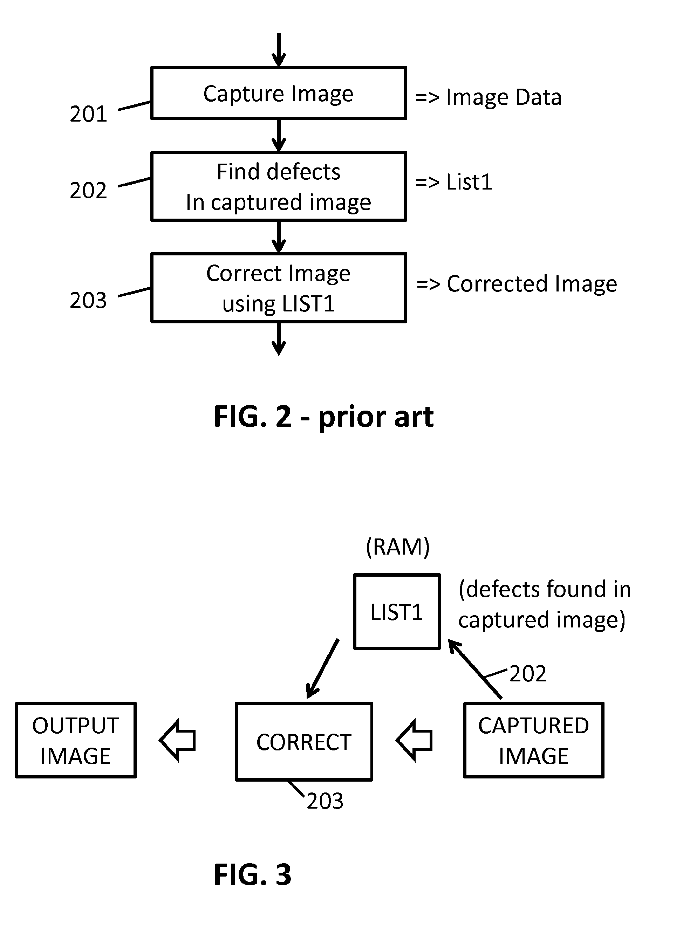

The present invention is mainly about detecting (potentially) defect pixel locations of a digital image sensor, in particular for instance image sensors implemented in CMOS technology. Such image sensors may typically have pixel defects of several types. One particular type is known as "dead pixels", meaning that these pixels do not provide an output signal at all. Another type is known as "RTS pixels". Such pixels show a particular type of noise, a few examples of which are illustrated in FIG. 1, (corresponding to FIG. 3.6 and FIG. 3.7 of the Jozsef Dudas master thesis, mentioned in the background section).

FIG. 1(a) shows the behaviour of a first RTS-pixel of an image sensor. What is shown is the pixel output of a particular pixel, as measured over 100 images, using a constant, but relatively long exposure time, while the image sensor is exposed to a dark scene. So what is measured is the so called "dark current". As can be seen in FIG. 1(a), the RTS pixel provides "roughly speaking" one of two values, therefore the pixel is called a two-level RTS pixel. From the histogram shown in FIG. 1(b) it can be seen that the likelihood of either value is about 50% for this particular pixel. FIG. 1(c) shows another RTS pixel, also having "two states", but apparently the likelihood of the state with the lower value is much smaller than the state with the higher value, as can be seen in the histogram of FIG. 1(d). FIG. 1(e) shows yet another RTS pixel having four different states, and FIG. 1(f) shows the corresponding histogram. The reader may consult the thesis for more information, if so desired.

While the reason or explanation for this pseudo-random behaviour of RTS pixels is not important for the present invention, what is important is that digital image sensors may have such RTS pixels, and that they may not be detected in every image taken by that image sensor, in particular, these pixels may not be detected during the production or calibration stage.

As mentioned in the background section, some existing digital cameras determine defective pixels "dynamically", i.e. after the production or calibration steps, during normal use of the digital camera (also known as "on the fly detection"). The main difference between finding (potential) defective pixels during production as opposed to during actual use of the camera, is that during production the scene to be captured is deliberately chosen (e.g. test images), and the captured image can be tested accordingly, while during actual use, the captured image is not known beforehand. Thus other detection algorithms are to be used during actual use of the camera, and also, the probability of the finding a "real defect" is lower than 100%, because the image content is not known beforehand.

FIG. 2 shows a prior art method of capturing an image, and dynamically detecting potentially defective pixels in the captured image. In this method, first an image is captured (step 201) by using the image sensor, resulting in image data, some of which data may be corrupt. This image data may be stored temporarily in volatile memory such as RAM or DRAM or the like. Then the image data is analysed (step 202) using known techniques for finding corrupt data. The locations of corrupt data in the image correspond to defective pixel locations of the image sensor. Several techniques for detecting corrupt image data (also called "bad pixel data") can be used, for example calculating for each image pixel the average image data of a number of its neighbours (for example of its eight neighbours), and calculating the difference between the respective pixel value and that average value, and if that difference is larger (in absolute value) than a certain threshold, the respective pixel is considered corrupt. This is but one example, and other, e.g. more sophisticated, algorithms may also be used. The result of this step 202 is a list (or table or the like) LIST1 of pixel locations of the corrupt image data, corresponding to defective pixel locations of the image sensor. For example, for each such defective pixel, the 'x' and 'y' coordinates may be stored in the list LIST1. In the remainder of the description, it will be assumed for ease of description that the image locations and the sensor locations are the same. Once the locations of defective pixels are known, the captured image data can then be corrected (step 203), e.g. by replacing the "bad" pixel values at the locations indicated by the list LIST1, by "good" values, e.g. obtained from interpolation of good pixels (of the same colour). Any such correction algorithm known in the art can be used in this step. The result of this step 203 is corrected image data. This corrected image data may then be further processed, e.g. compressed (e.g. using JPEG compression), and may then be stored in a non-volatile memory (e.g. a flash card), or transmitted to another device.

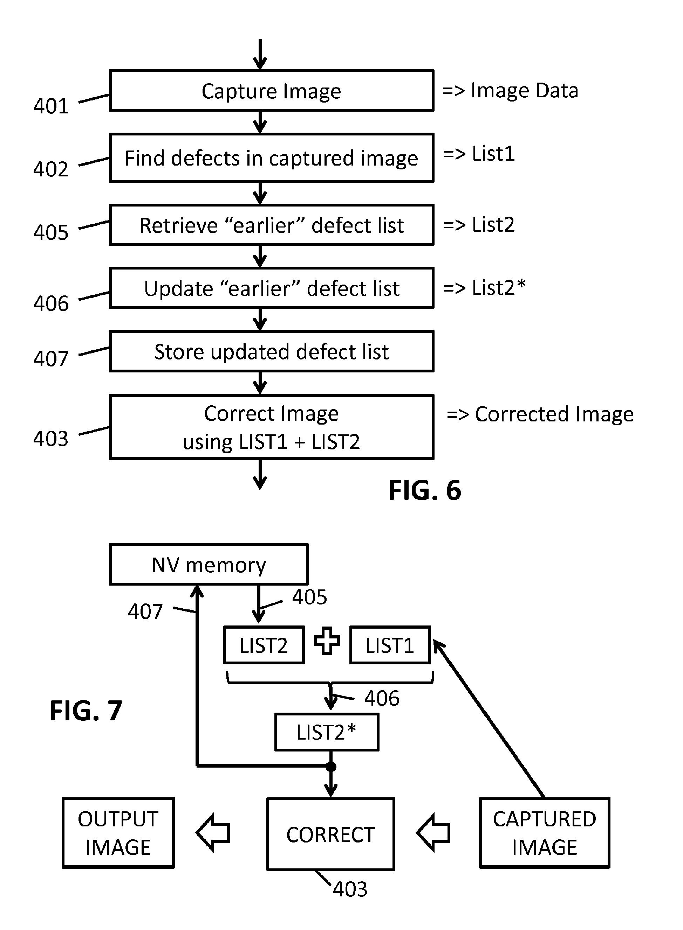

FIG. 3 is a another representation of this same process, showing the flow of data. In particular, it shows that the first list LIST1 is derived (step 202) from the (last) captured image, and that this list LIST1 is then used for correcting (step 203) the captured image data, resulting in the corrected output image. This figure will allow better comparison with methods according to embodiments of the present invention, as will be described further (from FIG. 6 onwards).

It is to be noted that in the method of FIG. 2 and FIG. 3 the list LIST1 is calculated anew for each captured image, and hence the content of the list LIST1 depends solely on the image being captured. It is further to be noted that this list LIST1 is not stored in non-volatile memory for later use. A disadvantage of this approach is that not "substantially all", e.g. that not at least 90% of all "corrupt data" may be found, in other words, that some "corrupt data" (e.g. 10% of the potential defective pixels) goes undetected, resulting in "false" image data, and possibly also in a sub-optimal image quality. If the detection algorithm is "too relaxed", it may find many false defects, if the detection algorithm is "too stringent", it may not detect all true defects. This may not be too much of a problem for consumer products, but it definitely is a problem for professional applications.

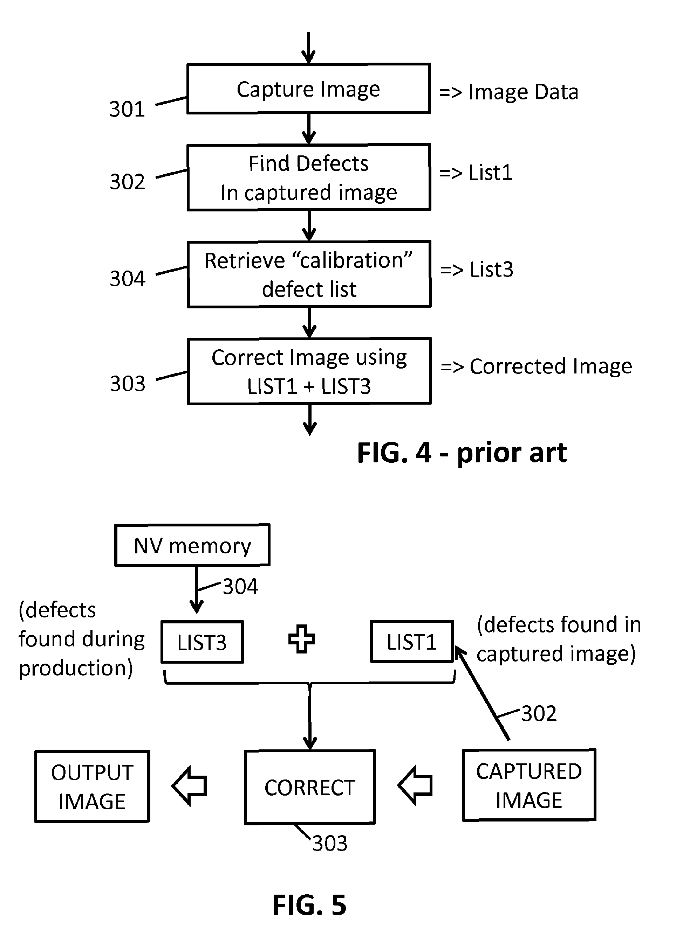

FIG. 4 shows another prior art method of capturing an image, wherein defect pixels are dynamically detected, and combined with defect pixels detected during production. In this method, first an image is captured (step 301) by using the image sensor, resulting in image data, some of which data may be corrupt. This image data may be stored temporarily in volatile memory such as RAM or DRAM, etc. Then the image data is analyzed (step 302) using known techniques for finding corrupt data, corresponding to defective pixel locations of the image sensor. The result of this step 302 is a list (or table or the like) LIST1 of pixel locations of the corrupt image data, corresponding to defective pixel locations of the image sensor. In a next step 304 a list LIST3 of known defects, e.g. determined during production or calibration of the image sensor, is retrieved from a non-volatile memory, e.g. from FLASH, and this list LIST3 is combined with the first list LIST1, here represented as "LIST1 + LIST3", where "+" means the union of the lists. Finally, in step 303, the captured image data is then corrected by replacing the pixel values at the locations indicated by the combined list "LIST1 + LIST3", by "good" values, using any known correction algorithms. The result of this step 303 is corrected image data. This corrected image data may then be further processed, e.g. compressed (e.g. using JPEG compression), and may then be stored in a non-volatile memory.

FIG. 5 shows the flow of data for the process of FIG. 4. The main difference with the data-flow of FIG. 3 is that the pixel locations used for the correction (step 303) are not only pixel defects found "dynamically" in the (last) captured image, but also pixels found during the production stage (stored in LIST3). It is noted that the "production defect list" LIST3 in this method is only retrieved, but not updated during the actual use of the digital camera, i.e. after the production and/or calibration stage.

It is an advantage of the method of FIG. 4 over the method illustrated in FIG. 2 that it also replaces pixel values for the defective pixels found during production, some of which may not be detected dynamically. However, a disadvantage of this approach is still that some of the defective pixels of the image sensor may still go undetected, thus resulting in an image with some "false" image data. This is particularly true for pixel locations of the image sensor which became defective only after the production, and also for RTS pixels which happened to function correctly during the production or calibration step, and which are not found dynamically.

### FIRST EMBODIMENT

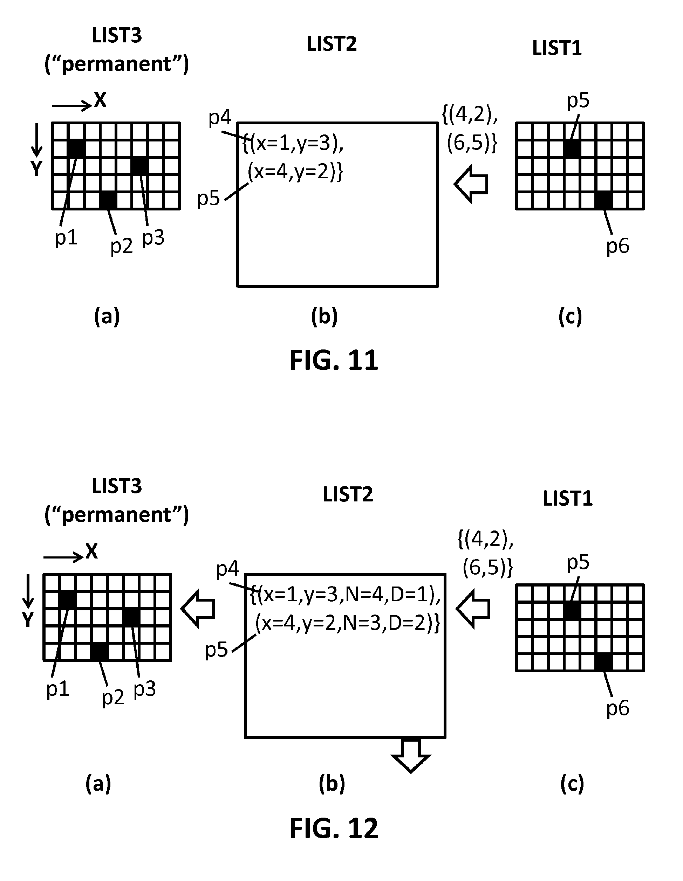

FIG. 6 and FIG. 7 show a first embodiment of a method according to the present invention. In this method, first an image is captured (step 401) by using the image sensor, resulting in image data, some of which data may be corrupt. This image data may be stored temporarily in volatile memory such as RAM or DRAM, etc. Then the image data is analysed (step 402) using known techniques for finding currently noticeable corrupt data, the location of the corrupt data in the captured image corresponding to defective pixel locations of the image sensor. The currently noticeable corrupt data includes all image data where image analysis techniques indicate, in the present image, data is corrupt. Some of the pixels, in particular RTS pixels, may not be indicated as defective in every single image, as explained above. As for the examples of FIG. 2 and FIG. 4, any known technique for detecting corrupt image data may be used. The result of this step 402 is a list (or table or bitmap or the like) LIST1 of pixel locations of the current corrupt image data, corresponding to currently detected defective pixel locations of the image sensor. In a next step 405 (next not indicating a sequential order; step 405 may take place before or during step 402) an "earlier" list LIST2 of potential defects is retrieved from a non-volatile memory, e.g. from FLASH. This "earlier" list LIST2 may be determined partly during calibration (optionally) and is determined at least partly after production or calibration of the image sensor, and is thus determined on the basis of actual images captured by the end-user during actual use of the digital camera. This means that, during the very first use of the camera, this second list LIST2 may be empty. In step 406 this second list LIST2 is updated, for example by combining the information in the second list LIST2 with current information from the first list LIST1, here indicated as "LIST2* = LIST1 + LIST2", where "+" means the combination of the lists. LIST2* contains all entries of the current LIST1, and all entries of the previous LIST2. Practical examples of such combinations will be described further (see FIG. 11 and FIG. 12). In step 407 this updated list LIST2* is stored in the non-volatile memory as an updated LIST2 for later use. Finally, in step 403, the captured image data is then corrected by replacing the pixel values at the locations indicated by the combined list LIST2*, by "good" pixel values, using any known correction algorithm. It is noted that the correction algorithm (step 403) may, or may not comprise the subtraction of a dark reference frame in addition to the mechanism of updating and storing the second list LIST2*. The result of this step 403 is an output image with corrected image data. This corrected image data may then be further processed, e.g. compressed (using e.g. JPEG compression), and may then be stored in a non-volatile memory (e.g. a flash card), or transmitted to another device, etc.

FIG. 7 shows the dataflow of this process. As far as known to the inventor, no prior art digital camera keeps a log or history of previously found defective pixels (found during actual use of the camera, thus not using test-images) and uses them for correcting the captured image. This technique is, however, particularly useful for locating defective pixels which do not appear as defective in every single image, such as e.g. RTS pixels.

It is an advantage of the method of FIG. 6 over the methods illustrated in FIG. 2 and FIG. 4 that it allows defective pixels to be detected over a plurality of captured images, not only the most recent captured image. This highly reduces the risk that any really defective pixel (including RTS pixels) remains undetected. Thus the risk that the output data contains "false" data is likewise reduced.

By updating the second list LIST2 with data retrieved from a currently shot image, and by storing the updated second list LIST2* in non-volatile memory, the method allows that substantially all of the "corrupt data" can be detected when a sufficient number of images is captured, and that the probability of defective pixels remaining undetected decreases as the number of images captured increases.

This method is particularly useful for detecting pixel locations that become defective only after the production, and in particular also for RTS pixels, since the latter may not be detected in the very last captured image, but may have been detected in an earlier image. Different strategies can be used for "updating" the second list LIST2, and/or combining the lists, as will be described in more detail further.

### SECOND EMBODIMENT

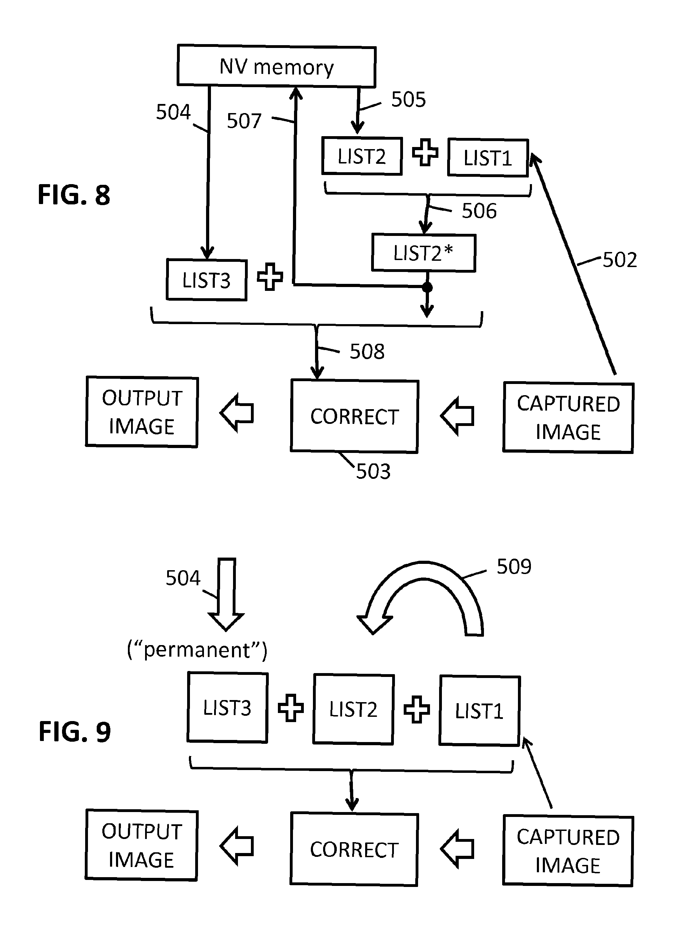

A second embodiment of a method according to the present invention is illustrated by means of the datapath shown in FIG. 8. The method comprises the same steps as the first embodiment (of FIG. 6 and FIG. 7), but in addition has the step 504 of retrieving a "calibration" defect list LIST3 from a non-volatile memory, and a step 508 of combining the pixels from this "calibration" list LIST3 with those of the updated list LIST2*, the combined list LIST3 + LIST2* being used for correcting (step 503) the captured image.

This embodiment has the advantage that already some of the defective pixels are found during the production stage, thus enabling an improved correction of the very first image that will be taken by the end-user. Probably most of the so called "stuck" pixels will be found during the production stage, but only some of the RTS pixels. Adding the mechanism of updating and storing the updated second list LIST2* as in the first embodiment offers also in this embodiment the advantage that additional defects that would occur during the lifetime of the image sensor, as well as RTS pixels, will with a high likelihood be found during the actual use of the digital camera, and will thus be corrected. Hence, the risk of providing an output image with false image data is reduced, or minimized.

In a variant of this method (not shown), the defects found during production may be stored (during production) in the very first version of the second list LIST2, and the third list LIST3 could be omitted, as well as the step 508 of combining the updated second list LIST2* and the third list LIST3.

FIG. 9 shows the mechanism of FIG. 8 in a more abstract way, where the "updating" of the second list" LIST2 with data from the first list LIST1 is indicated by means of the arrow 509. This figure shows more clearly that the information from the first list LIST1 is in fact "transferred" to the second list, and that the information from the second list LIST2 is kept separate from the information in the third list LIST3. The third list LIST3 is thus (in this embodiment) not updated during the lifetime of the digital camera, and contains the list of defective pixels found during the production stage, which are considered as permanent defects. It is to be noted that, in this embodiment, the second list holds information about "potentially defective pixels", some of which may have been detected only a very limited number of times, e.g. in only 1% of the captured images. Such pixels are probably falsely detected. The second list LIST2 may also contain other pixels which were detected a number of times above a first predetermined threshold, e.g. in at least 50% of the captured images. Such pixels are probably "RTS pixels". The second list LIST2 may also comprise pixels that are detected a number of times above a second predetermined threshold, e.g. in at least 90% of the captured images. Such pixels are probably "permanent" defects, such as "stuck" pixels or "dead pixels". It is an advantage of embodiments of the present invention that the mechanism of retrieving and updating the second list, as described above, can collect all the different kinds of defective pixels.

### THIRD EMBODIMENT

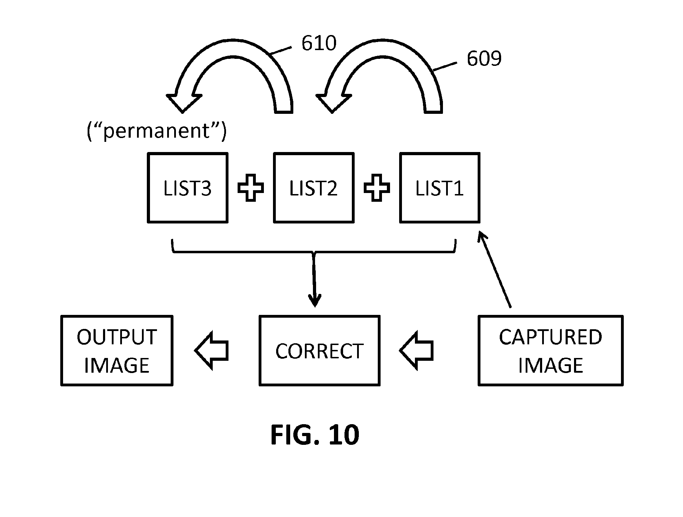

FIG. 10 shows a third embodiment of a method according the present invention by means of an abstract dataflow diagram like the one shown in FIG. 9. Comparison with FIG. 9 shows that in this embodiment the third list LIST3 may be updated with information from the second list LIST2. In this embodiment, the updated third list LIST3* is also stored in the non-volatile memory. For example, the pixels that were "detected" as "potential defects" a number of times larger than the second predetermined threshold as in the second embodiment, e.g. in 90% of the images, could be moved from the second list LIST2 to the third LIST3. In this way, the first list LIST1 would contain "dynamically found" potential defects, and the second list LIST2 would contain "earlier found" potential defective pixels, and the third list would contain "permanent defective pixels".

It is to be noted, however, that the corrected image of FIG. 10 would be identical to that of FIG. 9, irrespective of whether some of the pixels would be moved to the third list LIST3 or remain in the (updated) second list LIST2. The main advantage of moving such pixels out of the second list may be that these pixels would not have to be considered anymore when analysing the captured image, and when updating the second list LIST2 with information from the first list LIST1.

### LISTS CONTAINING LOCATION INFORMATION:

By means of FIG. 11 more details will be provided of what kind of data is stored in the first, second and optional third list. A specific example will be described, which can be used in any of the embodiments of the present invention, unless mentioned otherwise. In fact, it can already be mentioned here that the third list LIST3 would not be present in the first embodiment, and the third list LIST3 would not be updated in the second embodiment, so these aspects would have to be omitted, but the rest of what will be described is applicable to all embodiments.

FIG. 11 shows an example of how the lists LIST1, LIST2 and LIST3 can be used in embodiments of the present invention. The situation depicted is a hypothetical example of an image sensor having a size of 8 x 5 pixels, after one year of use. But of course, the invention is not limited to image sensors of only this size, and would work also for image sensors of another size, for example having 640 x 480 pixels, or 800 x 600 pixels, or 1024 x 768 pixels, or 2000 x 1500 pixels, or 4000 x 2000 pixels, or any other size.

The digital camera comprising this image sensor would have a non-volatile memory (e.g. flash), wherein the third list LIST3 (if present) is stored during production. In the example shown in FIG. 11(a), three pixels p1, p2, p3 were found as being "defective" pixels during production or calibration testing of the image sensor, and their locations would be stored in the third list LIST3 (or initialised second list LIST2, as described above). The third list LIST3 could be implemented as a list or table containing their coordinates, for example: { (2,2),(6,3),(4,5) }. Alternatively, the third list LIST3 can be stored as a bitmap of which bits are grouped in larger groups, such as e.g. bytes, the value of which is stored and is indicative of the locations of the defects. In the example shown, the bitmap has 40 bits, which can be divided into 5 bytes (in the example each byte having eight bits, corresponding to the number of pixels of one row, but obviously there might be more groups within one row, and/or groups might comprise bits of more than one row). In the example shown, the bytes can be represented by the hexadecimal values: [ 0x00, 0x40, 0x04, 0x00, 0x10 ], where the "0x" notation is used as a hexadecimal notation, whereby the bytes have a zero-bit '0' used to indicate that there is no defect, and a one-bit '1' used to indicate that there is a defect at the corresponding location. These hexadecimal values can easily be stored, e.g. as a file having a fixed size. But other ways of storing the defective locations may also be used, for example as a text file containing the coordinates of the defective pixels, where the file-size varies with the number of defective pixel locations found so far. The second list LIST2 (of previously detected pixels) of this example contains two pixels, p4 with coordinates (1,3) and p5 with coordinates (4,2) respectively. The order of storing the pixels in the list is not important for the functionality, but sorting them in some way may provide for a more efficient update of the second list LIST2. Assuming the situation of FIG. 11(a) and FIG. 11(b) as the starting position, capturing an image according to the method of FIG. 6 or FIG. 8 or FIG. 9 or FIG. 10 would proceed as follows. It is noted that the references to the method steps will refer to the steps shown of FIG. 6, but apply equally to the other embodiments. An image would be captured (step 401), and the image data would be analysed for finding corrupt data, corresponding to potential defects of the image sensor (step 402). Any known detection algorithm may be used. Suppose in this example that two pixels p5 and p6 shown in FIG. 11(c) would be detected as "potentially corrupt data". Thus the first list LIST1 could be a list containing the coordinates of these pixels, LIST1 = { (4,2),(6,5) }. In step 405 the earlier defect list LIST2 would be obtained from a non-volatile memory. In the example, LIST2 contains the values {(1,3),(4,2)}. In step 406 the second list LIST2 would be "updated" with information from the first list LIST1. In the example of FIG. 11 updating means "adding" the pixels from the first list LIST1 to the second list LIST2, unless they were already present in the second list. Thus the updated second list LIST2* would become {(1,3),(4,2),(6,5)}. This updated list LIST2* would be stored in the non-volatile memory in step 407. Finally, the captured image data would be corrected by replacing the values of all pixel locations considered as potentially defective, that is, all the pixels at the locations {(2,2),(6,3),(4,5),(1,3),(4,2),(6,5)} would be replaced. Thus in this example, six pixel locations are considered as "potentially defective", and thus 40-6=34 pixel locations are considered as "good". Any known correction algorithm can then be used (step 403) to correct the "bad" data of the captured image, for example by replacing the values of the defective pixel locations by other values obtained from "good" pixels, e.g. by averaging or copying or interpolating any of the 34 "good" pixel values.

In this example pixels can only be added to the second list LIST2, but cannot be removed from the second list during the entire lifetime of the digital camera. This may be a good strategy, provided that the reliability of the detection algorithm is sufficiently high. It is clear from this example, that the consequences of a "false detection" are quite harsh, since each falsely detected pixel location will be added to the second list. This means in fact that only quite "conservative" detection algorithms should be used when applying these lists, or using detection algorithms with conservative threshold values. The skilled person can find such threshold values by trial and error.

Alternatively or in combination thereto, certain conditions may be imposed before allowing the pixels of the first list LIST1 to be added to the second list, for example based on histogram information of the captured image, or based on overall or local sharpness or brightness information of the captured image, thus reducing the risk of false detections.

### SECOND LIST CONTAINING LOCATION INFORMATION AND STATISTICAL INFORMATION:

FIG. 12 shows a variant of the example of FIG. 11, wherein the second list LIST2 contains not only location information, e.g. the coordinates of the "potentially defective pixels", but also statistical information about these pixels. In the example shown, for each pixel in the second list, two counters are maintained: an image counter N and a defect counter D. It is assumed in this example that the second list LIST2 has the following data at start-up of the camera: LIST2 = { p4(x=1,y=3,N=4,D=1), p5(x=4,y=2,N=3,D=2) }, which means that the list contains two defective pixels which were found in earlier pictures, the pixel p4 is considered defective by the detecting algorithm in one out of four images since its first detection, the pixel p5 is considered defective by the detecting algorithm in two out of three images since its first detection.

The method of capturing an (additional) image according to the method of FIG. 6 (but applicable also to the embodiments of FIG. 8 to FIG. 10) would then work as follows. The steps 401, 402 and 405 of the method would be identical or similar to those described in the example of FIG. 11. The main difference would be the updating of information of the second list LIST2. In the example of FIG. 12, the image counter "N" of each pixel that is already present in the second list LIST2 is incremented by one when a new image is captured, and the defect counter "D" is incremented for the pixels of the second list LIST2 which are also present in the first list LIST1. Any pixels which were not yet present in the second list LIST2, will be added to the second list with counter values N=1 and D=1.

Thus, starting from the situation: LIST2={ (x=1,y=3,N=4,D=1), (x=4,y=2,N=3,D=2) } and LIST1 = {(4,2), (6,5)}, the updated second list LIST2* would be:
LIST2*={ p4(x=1,y=3,N=5,D=1), p5(x=4,y=2,N=4,D=3), p6(x=6,y=5,N=1,D=1) }, and this updated second list LIST2* is stored in the non-volatile memory for later use.

The main advantage of adding statistical information (such as e.g. the counters N, D, but the invention not being limited hereto) as part of the information stored in the second list LIST2, is that this statistical information can be advantageously used for re-evaluating the pixels in the second list, e.g. for making decisions to move pixels from the second list LIST2 to the third list LIST3, when they are considered as "permanent defective" pixels, according to a predefined criterion. An example of a criterion for moving pixels from the second list to the third list could be that the pixels for which the defect counter 'D' is larger than a first predefined threshold T1, (e.g. T1=2), are moved to the third list LIST3. In the example of FIG. 12, this would mean that the pixel p5(x=4,y=2,N=4,D=3) of the updated list LIST2* would be moved to the third list LIST3, the rational being that this pixel is found to be a "permanent defect" because it is found already in three out of four different images, since its first detection.

More interesting is that these counters N, D can also be used to removed pixels from the second list LIST2, when they seem to be "falsely detected", according to a predetermined criterion. An example of such a criterion could be that pixels are removed from the second list LIST2 if their defect counter D equals one, and their picture counter N is larger than a second predefined threshold T2, (e.g. T2=20). This means that, when a particular pixel was accidentally found to be a "potential defect", it can "escape" from the second list LIST2 if it is not detected as a "potential defect" in a subsequent predefined number or images, for instance twenty subsequent images. Another useful criterion could be that in order to escape from the second list LIST2, the image counter N should be larger than a third predefined threshold T3 (e.g. T3=100), and the ratio D/N of the defect counter D over the picture counter N is smaller than a fourth predefined threshold T4 (e.g. T4=5%). This criterion is less stringent, because it would allow another false detection in some of the subsequent twenty images.

The advantage of keeping statistical data about potentially defective pixels over multiple captured images should not be underestimated. Indeed, instead of only adding "potentially defective" pixels to the second list as described in the example of FIG. 11, adding statistical information may add information about the confidence level of whether the pixel is a "real defect", or a "false defect", which additional information can later be used to remove a pixel from the second list (i.e. declaring it a "false detection", or to move it to the third list LIST3 (i.e. declaring it a "permanent defect").

A possible criterion for moving a pixel (permanently) to the third list LIST3, could be the following: if the picture counter N is larger than a fifth predefined threshold T5 (e.g. T5=10) and the ratio of the defect counter D over the picture counter N is larger than a sixth threshold T6 (e.g. T6=50%).

The number given for the predefined thresholds T1, T2, T3, T4, T5, T6 in the examples above can easily be modified by a person skilled in the art, depending on the detection algorithm actually being used, and/or depending on other criteria for updating the second list, such as e.g. overall sharpness of the image, or overall brightness of the captured image.

It is to be noted that the image counter 'N' and the defect counter 'D' are only examples of statistical information that can be used in embodiment of the present invention, but other statistical data may also be used, for example, storing one or more of the "bad" pixel values in the second list LIST2. If the value for a particular pixel would always be identical, this could mean that the pixel is "stuck" at that particular value. Alternatively, the minimum and maximum value of a particular pixel may be stored, or the sum of the values, or the average value, etc. By keeping a history of the values of potentially defective pixels, at some point in time, e.g. when that pixel is analyzed over a sufficient number of pictures since its first detection, some decision can be made, e.g. to remove the pixel from the second list LIST2.

In an alternative embodiment of the present invention (not shown), the second list may contain location information (e.g. pixel coordinates), in addition to a "date-value" (e.g. day/month/year) when this pixel was last detected. It is known that most modern digital cameras have a real-time-clock on board, from which the date information can be retrieved. The date may e.g. be stored as a single integer number, representing the number of days since a predefined date. The "update" of the second list LIST2 would then be to either add newly detected pixels with their detection date to the second list LIST2, in case they were not yet present in the second list, or to update the date of last detection if that pixel was already present in the second list. As a criterion for moving pixels to the permanent list LIST3, one may use e.g. that a certain pixel is moved when it is detected again in e.g. less than 7 days. As a criterion for removing "falsely detected pixels" from the second list LIST2, one may use e.g. that the pixel is not detected during a certain period, e.g. more than 100 days. Of course such criteria are more valuable for cameras which are more often used, such as for instance professional cameras.

Although the threshold values mentioned above, are typically fixed values, it may be possible, in certain embodiment of the invention, to dynamically adjust these thresholds.

Optionally, the digital camera may also have a "reset-mode", that is a function to remove all pixels from the second list LIST2. This mode may be accessible for the end-user, or only for a repair centre.

In an alternative embodiment (not shown), the first list LIST1 may also contain additional information (besides location information), such as a likelihood value that the pixel is a defect. Suppose for example that the detection algorithm compares the value of a particular pixel with its eight neighbours, and that the difference of this value is 50% of the full scale with all of its neighbours, that would be a strong indication that this pixel is really a defect. This likelihood-value may then also be added to the second list, and updated accordingly.

Other statistical information besides the ones mentioned in the examples, may however also be used.

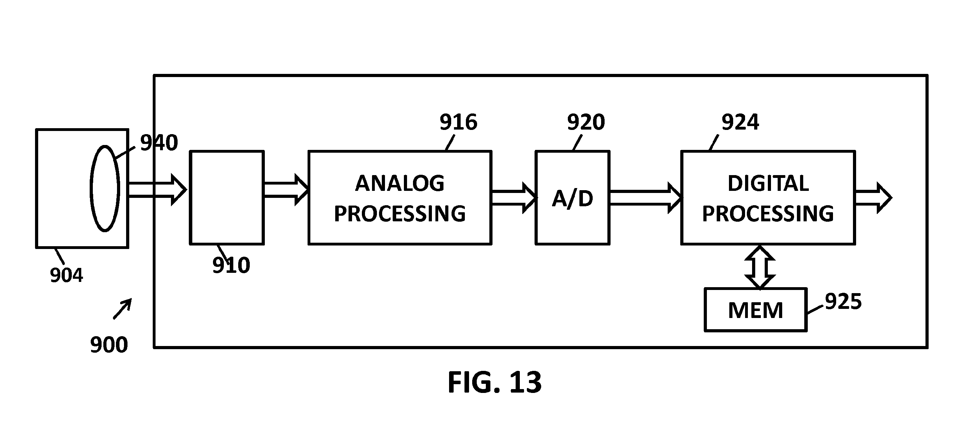

FIG. 13 shows an example of a block-diagram of a digital camera 900 according to embodiments of the present invention. The digital camera 900 may include optics 904 that may have a conventional aperture (not shown), filter (not shown), and lens system 940 used to guide the incident light into the camera and onto an image sensor 910. The image sensor 910 comprises image pixels, some of which may be "defective", as described above. The image pixel values may be subjected to analog processing in an analog processing block 916 before being forwarded to an array of analog-to-digital (A/D) converters 920 for digitizing the analog pixel values. The image pixel values are routed to a digital processing block 924, where the analysis of the captured image takes place, resulting in the first list LIST1. The processing block 924 is connected to external or internal memory devices or block, e.g. an internal volatile memory (e.g. RAM) and an external non-voltage memory (e.g. flash), for storing and/or retrieving the second list LIST2 and optionally the third list LIST3. The same digital processing block 924 would also be used to correct the "bad" image data, by replacing it with "good" image data, as described above. The digital processing block may perform further digital processing, such as e.g. cross-talk-correction, image compression, etc before providing the image data. The image sensor array 910, the analog processing block 916, the A/D block 920 and the digital processing block 924 may be integrated in a single integrated circuit implemented in CMOS technology.

The analog processing block 916 may include known circuitry, such as e.g. correlated double sampling circuitry, as well as any gain and filtering, or offset correction.

The A/D converters in block 920 may comprise e.g. 8-bit or 10-bit or 12-bit or even more bits convertors.

The digital processing block 924 may also be implemented in hardware, or in a programmable DSP, provided with a suitable algorithm for performing any of the methods described above.

It is to be noted that the update of captured images need not necessarily be performed on each captured image. For example, in case the digital camera is used for capturing a movie, the method may be applied e.g. only on the last picture of the movie. In that way, the additional time for processing the image and/or retrieving the lists from the memory, would not negatively influence the capturing of the movie.

## Claims

1. Method of capturing an image by a digital camera (900), the digital camera (900) comprising an image sensor (910) for capturing image data, a processor (924) for processing the captured image data, and a memory (925) operably connected to the processor (924) for storing and obtaining information, the method comprising:
a) capturing an image using the image sensor (910);
b) detecting potentially defective pixels of the image sensor (910) by analysing the captured image using a predefined detection algorithm, and storing information about the potentially defective pixels in a first list (LIST1);
c) retrieving from the memory (925) a second list (LIST2) comprising information about previously detected potentially defective pixels of the image sensor;
d) updating the second list (LIST2) with the information from the first list (LIST1);
e) storing the updated second list (LIST2*) in the memory (925);
f) correcting the captured image data based on the updated list (LIST2*), using a predefined correction algorithm.

2. The method according to claim 1, further comprising step g) of retrieving from the memory a third list (LIST3) comprising information of defective pixels detected during production or calibration,
and wherein the correction in step f) is further based on the defective pixels from the third list (LIST3).

3. The method according to claim 2, further comprising:
- after updating the second list (LIST2) with the information from the first list (LIST1), and before storing the updated second list (LIST2*) in the memory (925), a step h) of analysing the updated second list (LIST2) and moving information from pixels considered as permanent defects according to a predefined criterion from the second list (LIST2) to the third list (LIST3), wherein step e) further comprises storing the third list (LIST3) in the memory (925).

4. The method according to any of the previous claims, wherein the information about the potentially defective pixels stored in the first list (LIST1) and the second list (LIST2) comprises the pixel location (x, y).

5. The method according to claim 4, wherein the information about the potentially defective pixels stored in the first list (LIST1) further comprises the pixel value (v).

6. The method according to any of claims 4 or 5, wherein the information in the second list (LIST2) further comprises statistical information about the potentially defective pixels.

7. Method according to claim 6, wherein the statistical information in the second list (LIST2) comprises a defect counter (D), and wherein updating the second list (LIST2) in step d) comprises either adding the pixels from the first list (LIST1) to the second list (LIST2) if not yet present in the second list (LIST2), or increasing the defect counter (D) of the respective pixels if already present in the second list (LIST2).

8. Method according to claim 7 when dependent on claim 3, wherein the predefined criterion for considering a pixel location as a permanent defect is when the defect counter (D) is larger than a first predefined threshold (T1).

9. Method according to claim 7, wherein the statistical information in the second list (LIST2) furthermore comprises an image counter (N), and wherein updating the second list (LIST2) in step d) comprises increasing the image counter (N) of each of the pixels already present in the second list.

10. Method according to claim 9, wherein updating the second list (LIST2) comprises removing pixels from the second list (LIST2) for which the defect counter (D) equals one, and the picture counter (N) is larger than a second threshold (T2).

11. Method according to claim 9, wherein updating the second list (LIST2) comprises removing pixels from the second list (LIST2) for which the picture counter (N) is larger than a third predefined threshold (T3), and the ratio of the defect counter (D) over the picture counter (N) is smaller than a fourth predefined threshold (T4).

12. Method according to any of claims 10 or 11 when dependent on claim 3, wherein the predefined criterion for considering a pixel location as a permanent defect is when the picture counter (N) is larger than a fifth predefined threshold (T5) and the ratio of the defect counter (D) over the picture counter (N) is larger than a sixth predefined threshold (T6).

13. Digital camera (900) comprising
- an image sensor (910) for capturing image data;
- a processor (924) connected to the image sensor (910) for receiving the image data;
- a memory (925) operably connected to the processor (924),
the processor (924) being provided with an algorithm for performing a method according to any of claims 1 to 12.

14. A computer program product that, when executed on the processor (924) of a digital camera (900) having an image sensor (910) and a memory (925), provides instructions for executing a method according to any of claims 1 to 12.
